# EUROPEAN PATENT APPLICATION

(11) **EP 4 020 400 A2**
(43) Date of publication of application: **29.06.2022**
(21) Application number: 20857952.4
(22) Date of filing: 24.08.2020
(51) Int. Cl.: G06T 17/20, G06T 15/04

(54) **IMAGE PROCESSING METHOD AND IMAGE PROCESSING DEVICE FOR GENERATING 3D CONTENT BY MEANS OF 2D IMAGES**

(30) Priority: 23.08.2019 KR 20190103851; 07.05.2020 KR 20200054726
(71) Applicant: Art & Space IT Inc., Dongan-gu Anyang-si Gyeonggi-do 14059 (KR)
(72) Inventor: PARK, Bayng Jae, Seoul 03346 (KR); KIM, Heegeun, Suwon-si Gyeonggi-do 16627 (KR); LEE, Jae Min, Uiwang-si Gyeonggi-do 16062 (KR)
(74) Representative: Botti, Mario
(86) International application number: PCT/KR2020/011216
(87) International publication number: WO 2021/040342

(57) **Abstract**

Disclosed in the present specification is an image processing method performed by an image processing device, the image processing method comprising the steps of: obtaining a first image representing a 2D image of 3D content observed from a first position in a 3D coordinate system and a second image representing a 2D image of the 3D content observed from a second position in the 3D coordinate system; detecting a first boundary line representing one boundary of the 3D content from the first image; detecting a second boundary line representing the one boundary from the second image; and determining a third boundary line for three-dimensionally expressing the one boundary in the 3D coordinate system using the first boundary line and second boundary line.

## Description

### BACKGROUND OF THE DISCLOSURE

### Field of the disclosure

The present disclosure relates to an image processing method and device for generating 3D contents.

### Related Art

3D modeling is three-dimensional modelization or virtualization of the real world or an unreal world. Such 3D modeling may be implemented by representing a 3D target object using geometric data.

In the past, since a 3D representation construction method based on surveying data of the real world was considered inefficient, rough 3D modeling was performed on the basis of visual measurement through pictures or surveys or modeling of an unreal word was performed without using surveying data. However, recently, with the development of the survey technique, photogrammetry tools, and computer graphic technique, 3D modeling of the real world has been gradually achieved.

For example, 3D modeling may be implemented by three-dimensionally scanning a target object. A picture created by scanning shows the distance to one surface from each point. Accordingly, the 3D position of each point in the picture can be recognized. According to this technique, typically, scanning in several directions is required to obtain information in all directions of a target object and such scanning takes a considerable amount of time.

A method of quickly producing a more realistic 3D model by setting a virtual camera and a texture in a 3D space using data obtained from a common photogrammetry tool and by setting coordinates of an object to improve efficiency of 3D modeling has been disclosed in Korean Patent Application Publication No. 10-2018-0047235.

However, as the demands for 3D modeling have been recently rapidly increased, there is a need to use a more efficient 3D modeling method.

### SUMMARY

The present disclosure proposes an image processing method and device for efficiently generating realistic 3D contents.

An image processing method that is performed by an image processing device according to an embodiment for achieving the objects includes: obtaining a first image representing a 2D image of 3D contents observed from a first position in a 3D coordinate system and a second image representing a 2D image of the 3D contents observed from a second position in the 3D coordinate system; detecting a first boundary line representing one boundary of the 3D contents from the first image; detecting a second boundary line representing the one boundary from the second image; and determining a third boundary line for three-dimensionally expressing the one boundary in the 3D coordinate system by means of the first boundary line and second boundary line.

The determining of a third boundary line may include: creating a first projection surface by projecting the first boundary line in a direction in which the 3D contents are observed at the first position; creating a second projection surface by projecting the second boundary line in a direction in which the 3D contents are observed at the second position; and determining the third boundary line on the basis of crossing of the first projection surface and the second projection surface.

The creating of a first projection surface may be performed by projecting the first boundary line on the basis of FOV (Field Of View) information and resolution information of the first image.

The detecting of a first boundary line may include: displaying the first image on a user terminal; representing the first boundary line on the first image on the basis of user input; and detecting the first boundary line in accordance with representation of the first boundary line.

The image processing method for achieving the objects may further include modifying the first boundary line by changing the position of at least one point constituting the first boundary line in accordance with position movement of an indicator displayed on the terminal. The position of the indicator displayed on the terminal may be changed in accordance with user input.

The image processing method for achieving the objects may further include creating a boundary surface three-dimensionally represented in the 3D coordinate system using the third boundary line. The boundary surface may be created by extending the third boundary line in a predetermined direction.

The image processing method for achieving the objects may include: recognizing a target object in 3D contents; obtaining a first image and a second image in which the target object is 2-dimensionally represented; detecting a boundary line of the target object in the first image and the second image; and determining a boundary line three-dimensionally represented in the 3D coordinate system using the detected boundary line.

The determining of the three-dimensionally represented boundary line may include determining a boundary line representing the same boundary of the target object represented in both the first image and the second image.

The image processing method for achieving the objects may further include creating a boundary surface three-dimensionally represented in the 3D coordinate system using the three-dimensionally represented boundary line.

The image processing method for achieving the objects may further include adding the created boundary surface to the 3D contents. Predetermined data corresponding to the created boundary line may be removed from the 3D contents and then data about the created boundary surface may be added to the 3D contents.

An image processing device according to an embodiment for achieving the objects includes a processor and a memory, obtains a first image representing a 2D image of 3D contents observed from a first position in a 3D coordinate system, obtains a second image representing a 2D image of the 3D contents observed from a second position in the 3D coordinate system, detects a first boundary line representing one boundary of the 3D contents from the first image, detects a second boundary line representing the one boundary from the second image, and determines a third boundary line for three-dimensionally representing the one boundary in the 3D coordinate system by means of the first boundary line and second boundary line.

The image processing device according to an embodiment for achieving the objects may include a processor and a memory, and the processor may recognize a target object in 3D contents, obtain a first image and a second image in which the target object is 2-dimensionally represented, detect a boundary line of the target object in the first image and the second image, and determine a boundary line three-dimensionally represented in the 3D coordinate system using the detected boundary line.

A computer-readable recording medium according to an embodiment for achieving the objects may be a computer-readable recording medium in which computer programs for performing the image processing method according to the above embodiment are recorded.

### ADVANTAGEOUS EFFECTS

According to the technological description of the present disclosure, an image processing method and an image processing device according to an embodiment can efficiently create 3D contents three-dimensionally representing a target object using a boundary line selected from a plurality of 2D images about the target object.

### BRIEF DESCRIPTION OF THE DRAWINGS

FIG. 1 is a block diagram showing an image processing device according to an embodiment.
FIG. 2 is a flowchart illustrating an image processing method that is performed by the image processing device according to an embodiment.
FIG. 3 is a conceptual diagram showing position relationships of a target object and a plurality of cameras surrounding the target object according to an embodiment.
FIGS. 4 and 5 are views showing first and second images according to an embodiment and a user interface for receiving user input for the first and second images.
FIG. 6 is a view illustrating a method of creating a virtual projection surface in a 3D space by the image processing device according to an embodiment.
FIG. 7 is a conceptual diagram illustrating a method of creating a boundary line using crossing of a first projection surface and a second projection surface by the image processing device according to an embodiment.
FIG. 8 is a flowchart illustrating a method of updating 3D contents that is performed by the image processing device according to an embodiment.
FIG. 9 shows an embodiment of 3D contents.
FIG. 10 is a view showing an embodiment of creating a virtual 3D surface in a 3D space.
FIG. 11 is a view showing an example in which a portion of 3D contents is updated.

### DESCRIPTION OF EXEMPLARY EMBODIMENTS

The following provides only the principle of the present disclosure. Accordingly, those skilled in the art may implement of the principle of the present disclosure and various apparatuses included in the concept and range of the present disclosure which are not clearly described or shown herein. All conditional terminologies and embodiments described herein should be understood as being definitely intended as an object for understanding the concept of the present disclosure without limiting the specifically stated embodiments and states.

The objects, features, and advantages of the present disclosure described above will be clearer through the following detailed description relating to the accompanying drawing, so the spirit of the present disclosure would be easily implemented by those skilled in the art.

Terms such as "first", "second", "third", and "fourth" in the specification and claims are used to discriminate similar components, if they are, and are used to described specific sequences and orders, though not necessary. It should be understood that the terms may be compatible under an appropriate environment such that embodiments of the present disclosure can be operated, for example, in other sequences not shown or described herein. Further, when a method includes a series of steps, the orders of the steps do not necessarily follow the orders of the steps, and some steps may be omitted and/or some other steps not stated herein may be added to the method.

The terms "left", "right", "front", "rear", "top", "bottom", "up", "down", etc. in the specification and claims are used for description, and do not necessarily mean unchangeable positions. It should be understood that the terms may be compatible under an appropriate environment such that embodiments of the present disclosure can be operated, for example, in other directions not shown or described herein. The term "connected" is defined as electrical or non-electrical direct or indirect connection. The objects described as being adjacent may be in general ranges or areas physically being in contact with each other, being close to each other, or being the same, appropriately in the contexts. The term "in the embodiment", though not necessary, means the same embodiment.

The terms "connected", "connecting", "fastened", "fastening", "coupled", "coupling", etc. in the specification and claims and various changes of these expressions are used to mean that the object component is directly connected to another component or indirectly connected to another component through another component.

Terms "module" and "unit" that are used for components in the following description are used only for the convenience of description without having discriminate meanings or functions.

The terms used in the specification are for describing embodiments without limiting the present disclosure. In the specification, a singular form includes a plural form unless specifically stated in the sentences. The terms "comprise" and/or "comprising" used herein do not exclude a case in which another component, step, operation, and/or element exist or are added in the stated component, step, operation, and/or element.

However, in describing the present disclosure, detailed descriptions of well-known technologies will be omitted so as not to obscure the description of the present disclosure with unnecessary detail Hereinafter, exemplary embodiments of the present disclosure will be described with reference to the accompanying drawings.

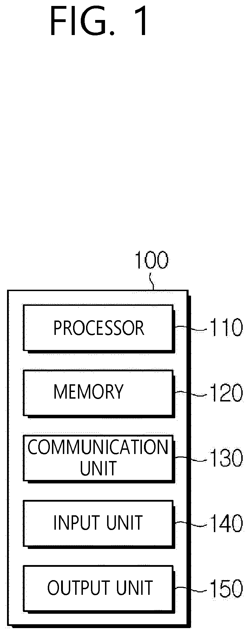

FIG. 1 is a block diagram showing an image processing device that creates 3D contents according to an embodiment. An image processing device 100 according to an embodiment may include a processor 110, a memory 120, a communication unit 130, an input unit 140, and an output unit 150. These components are examples and some of the components may be omitted, or components not stated above may be further included.

The processor 110 may control each component of the image processing device 100 including at least any one of the memory 120, the communication unit 130, the input unit 140, and the output unit 150 to perform an image processing method to be described below by controlling operation of the image processing device 100.

In an embodiment, the processor 110 may obtain a first image representing the image of 3D contents shown at a first position in a 3D coordinate system, and a second image representing image of 3D contents shown at a second position in the 3D coordinate system. The processor 110 may detect a first boundary line representing a boundary of the 3D contents in the first image, may detect a second boundary line representing a boundary in the second image, and may determine a third boundary line representing a boundary in the 3D coordinate system using the first boundary line and the second boundary line. The third boundary line may be a virtual line represented in the 3D coordinate system.

In another embodiment, the processor 110 may recognize a target object included in 3D contents and may obtain a first image and a second image in which the target object is represented. The processor 110 may detect a boundary line of the target object in the first image and the second image, and may determine a virtual boundary line in a 3D coordinate system using the detected boundary line.

The memory 120 may store program data and temporary data for operation of an image processing device. Further, the memory 120 may include 3D contents data for performing an image processing method, 2D image data of 3D contents created at a position, etc. The 2D image data, which are additional information, may include position information in a 3D coordinate in which a 2D image is created (e.g., position information represented by coordinates on x-axis, y-axis, and z-axis), camera information for creating a 2D image (e.g., information about an FOV (Field Of View), resolution, a color format, the direction that the FOV of a camera face, etc.).

The communication unit 130 may receive 3D contents data, 2D image data, image creation information, control information, etc. from an external device using an existing wired/wireless communication method in accordance with control by the processor 110, and may transmit 3D contents data, 2D image data, image creation information, control information, etc. to the external device.

The input unit 140 may be a keyboard, a mouse, a touch panel, a user interface, etc. using them for receiving user input to perform the image processing method according to an embodiment.

The output unit 150 may be a display unit, etc. including a display panel, etc. to output information for questioning a user about a processing result or user input in order to perform the image processing method according to an embodiment.

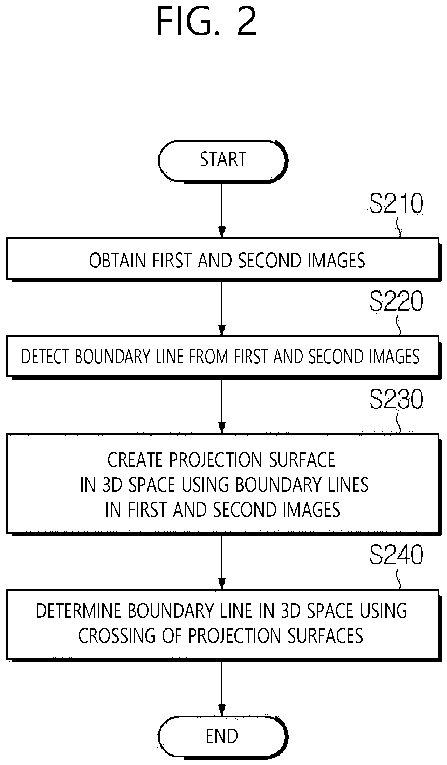

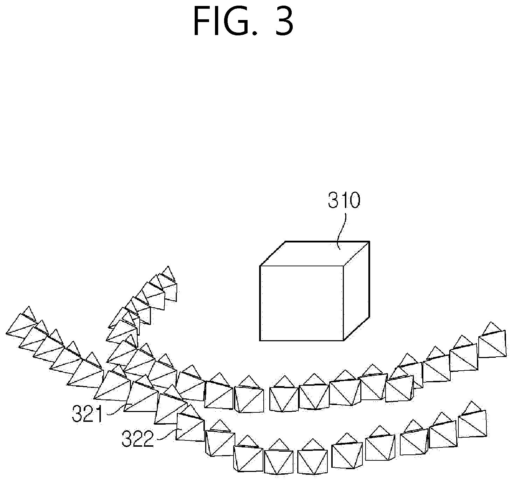

FIG. 2 is a flowchart illustrating an image processing method that is performed by the image processing device according to an embodiment. FIG. 3 is a conceptual diagram showing the position relationships of a target object 310 and a plurality of cameras 320 surrounding the target object.

Hereafter, a method of creating 3D contents of a target object by performing the image processing device by means of the image processing device according to an embodiment is described with reference to FIGS. 2 and 3.

First, the image processing device may obtain a first image and a second image of a target object 310 (S210). The first image may be image of the target object 310 shown at a first position 321 in a 3D coordinate system. For example, when the 3D coordinate system is a real space, the first image may be a 2D image created by photographing the target object 310 using a first camera 321 positioned at any one position in the 3D coordinate system. For example, when the 3D coordinate system is a virtual 3D space, the first image may be a 2D image created by photographing the target object 310 using a virtual first camera 321 positioned at any one position in the 3D coordinate system. Similarly, the second image may be image of the target object 310 shown at a second position 322 in a 3D coordinate system. For example, the second image may be a 2D image created by photographing the target object 310 using a second camera 322 positioned at any one position in the 3D coordinate system.

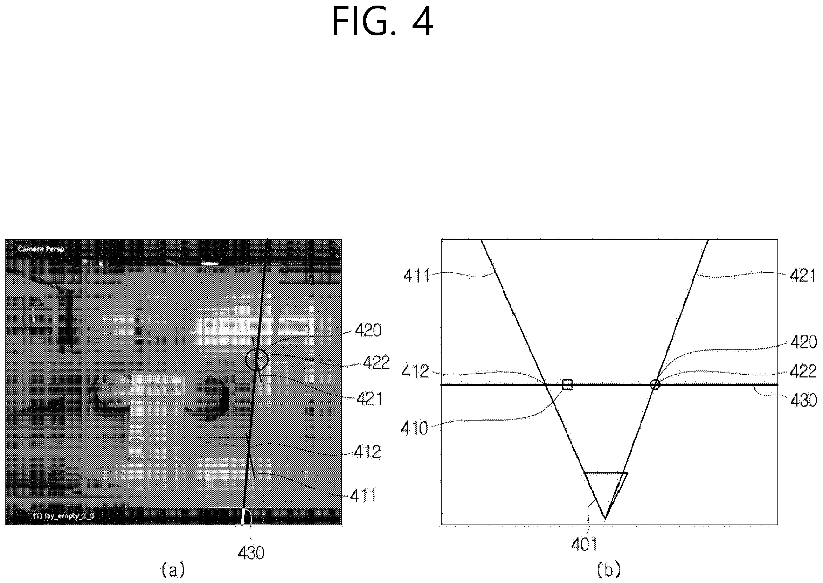

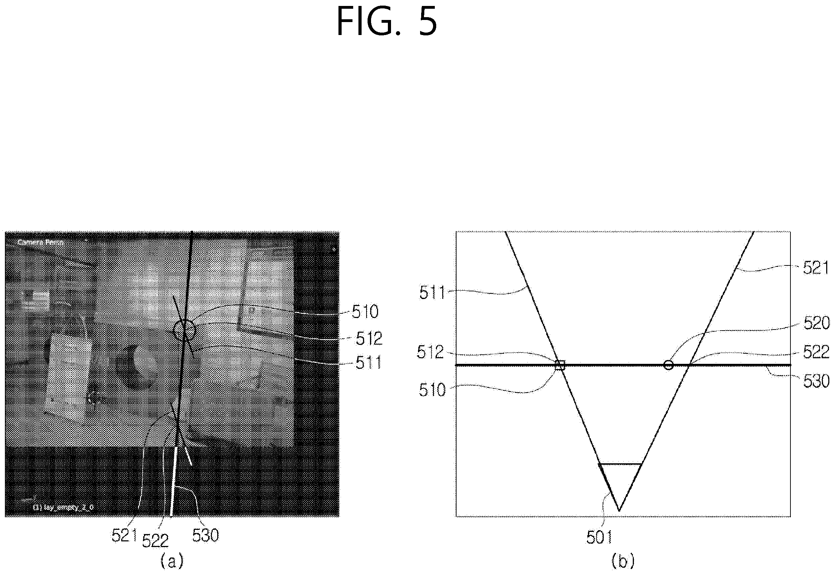

In an embodiment, the first position and the second position are different positions, and accordingly, objects represented in the first image and the second image may be different from each other. For example, a first image may be shown as in FIG. 4 (a). For example, a second image may be shown as in FIG. 5 (a).

Next, the image processing device may detect a boundary line of the target object 310 in the first and second images. The image processing device according to an embodiment may recognize an object in an image using an object recognition algorithm. Further, it may be possible to detect the boundary line of a target object represented in an image by recognizing the boundary of an object recognized using the boundary recognition algorithm.

Meanwhile, the image processing device according to an embodiment may detect the boundary line of a target object in an image on the basis of user input. To this end, the image processing device according to an embodiment may display a first image on a display unit of a user terminal. Accordingly, the user can check the first image represented on the display unit. In an embodiment, a user may input user input for creating a first boundary line on a first image to the image processing device. Accordingly, the image processing device may obtain data representing the first boundary line created in the first image. For example, the image processing device may obtain data representing the first boundary line in accordance with user input representing a line on the display unit.

When processing the first image is finished, the image processing device according to an embodiment may display a second image on the display unit of the user terminal and may obtain data representing a second boundary line on the basis of corresponding user input.

An embodiment of representing the first and second image and receiving corresponding user input is shown in FIGS. 4 and 5. FIG. 4 (a) shows the first image and a user interface represented on the first image, and FIG. 4 (b) shows the concept of the user interface. FIG. 5 (a) shows the second image and a user interface represented on the second image, and FIG. 5 (b) shows the concept of the user interface.

Hereafter, an example of using a user interface for detecting the boundary line of a target object in the first image is described with reference to FIG. 4. In an embodiment, the image processing device may represent a first boundary line 430 on a first image represented on a display unit on the basis of user input that is input through a user interface.

The user interface according to an embodiment may be composed of a first controller 410 and a second controller 420. The image processing device according to an embodiment may dispose the first controller 410 at the corresponding position when user input for an empty space of the first image is obtained, and may dispose the second controller 420 at the corresponding position when user input for the empty space of the first image is obtained again. Accordingly, the image processing device, as shown in FIG. 4 (b), may create a first boundary line 430 passing through the first controller 410 and the second controller 420. Further, the image processing device may change the shape of the first boundary line 430 by changing the positions of the controllers in accordance with user input for changing the positions of the controllers.

In an embodiment, the start point and the end point of the boundary line may be set on the basis of the positions of the controllers. The start point and the end point may be created at a predetermined distance from the positions of the controllers or may be created at a position indicated by the controllers. For example, as shown in FIG. 4 (b), the start point 412 of the first boundary line 430 may be created at a predetermined distance from the position of the first controller 410. The image processing device according to an embodiment may represent the start point 412 created by the first controller 410 to the user by representing a first guide line 411 perpendicular to the first boundary line 430 through the display unit. The first guide line 411 may be a virtual line created through the start point 412 at the position 401 of the first camera.

Further, as shown in FIG. 4 (b), the end point 422 of the first boundary line 430 may be created at the position of the second controller 420. The image processing device according to an embodiment may represent the end point 422 created by the second controller 420 to the user by representing a second guide line 421 perpendicular to the first boundary line 430 through the display unit. The second guide line 421 may be a virtual line created through the end point 422 at the position 401 of the first camera.

Meanwhile, as shown in FIG. 5 (b), the start point 512 of the second boundary line 530 may be created at the position of the first controller 510. The image processing device according to an embodiment may represent the start point 512 created by the first controller 510 to the user by representing a first guide line 511 perpendicular to the second boundary line 530 through the display unit. The first guide line 511 may be a virtual line created through the start point 512 at the position 501 of the second camera.

Further, the end point 522 of the second boundary line 530 may be created at a predetermined distance from the position of the second controller 520. The image processing device according to an embodiment may represent the end point 522 created by the second controller 520 to the user by representing a second guide line 521 perpendicular to the second boundary line 530 through the display unit. The second guide line 521 may be a virtual line created through the end point 522 at the position 501 of the second camera.

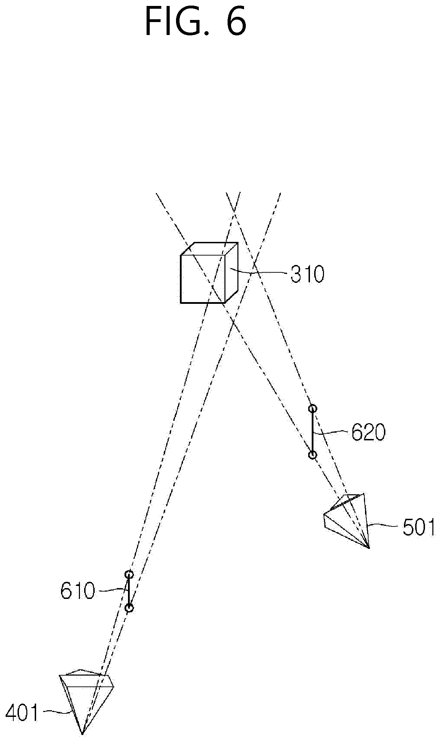

Next, the image processing device may create a projection surface in a 3D space using the boundary lines of the target objects detected from the first image and the second image (S230). FIG. 6 is a view illustrating a method of creating a virtual projection surface in a 3D space by the image processing device according to an embodiment. As shown in FIG. 6, the image processing device according to an embodiment may create a first projection surface in a 3D space by projecting a first boundary line to the 3D space.

For example, the image processing device according to an embodiment may create a first projection surface by projecting a first boundary line toward a target object at a first position in a three dimension in which a first image is created.

In more detail, in an embodiment in which the position 401 of the first camera taking a first image is specified on the basis of a 3D coordinate system and the position 301 of the target object is specified on the basis of the 3D coordinate system, a first projection surface may be created by projecting a first boundary line created in accordance with the resolution of the first image at the position of the first camera.

In the case, the first boundary line may be projected in accordance with the photographing conditions of the first image. For example, the first boundary line may be projected in accordance with the FOV information of the first image. In an embodiment, a first boundary line may be projected into a 3D space while being enlarged with the enlargement proportion according to the FOV information of a camera stored with a first image.

Similarly, the image processing device according to an embodiment may create a second projection surface in a 3D space by projecting a second boundary line to the 3D space.

Meanwhile, in step S230, the surface that is determined by the first guide line and the second guide line set, each set for an image, may be determined as a projection surface. Accordingly, the projection surface that is determined may be defined in a way of representing the first and second guide lines. For example, a projection surface may be represented by vector expression of the first and second guide lines.

In more detail, the image processing device according to an embodiment may determine a surface defined by the first guide line 411 and the second guide line 421 for the first image as a first projection surface of the first image. Similarly, the image processing device according to an embodiment may determine a surface defined by the first guide line 511 and the second guide line 521 for the second image as a second projection surface of the second image.

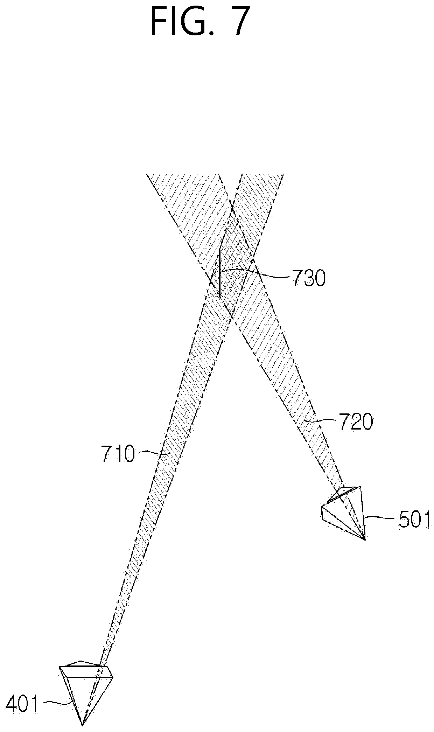

Next, the image processing device may determine a boundary line in the 3D space using crossing of projection surfaces (S240). FIG. 7 is a conceptual diagram illustrating a method of creating a boundary line using crossing of a first projection surface 710 and a second projection surface 720. The image processing device, as shown in FIG. 7, may determine a boundary line 730, which is created by crossing of the first projection surface 710 and the second projection surface 720 in a 3D space, as a 3D boundary line in the 3D coordinate system for the boundary line specified in the 2D image in previous step S220.

As described above, the image processing device may create 3D contents representing a target object in a 3D coordinate system by performing the method described above on each boundary line representing the target object.

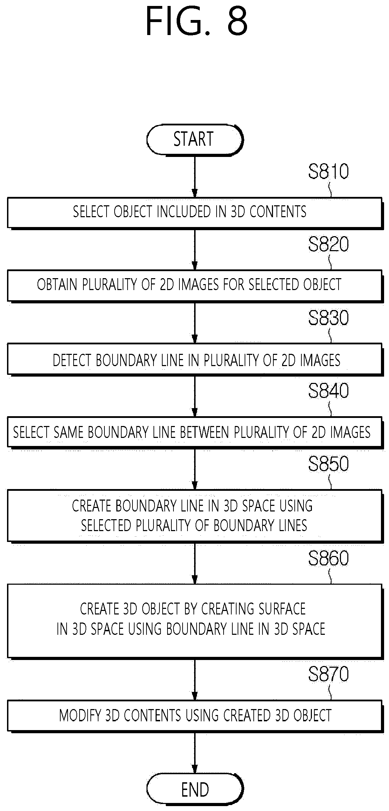

FIG. 8 is a flowchart illustrating a method for updating 3D contents by applying the image processing method described above to 3D contents created in a virtual 3D space using the image processing device according to an embodiment.

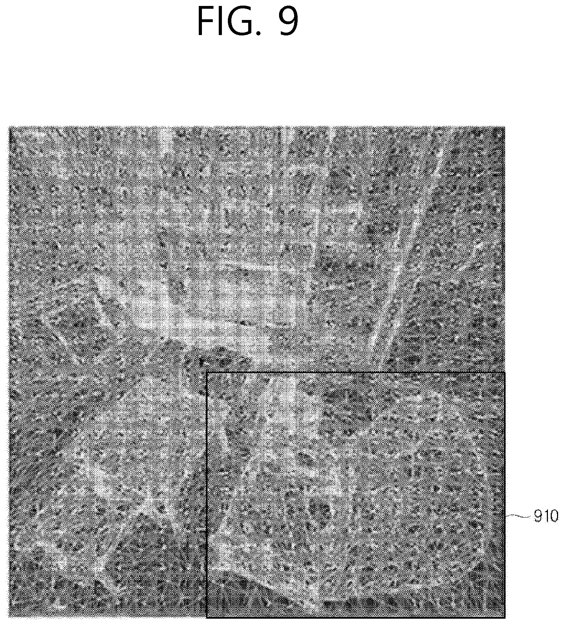

First, the image processing device according to an embodiment may select a target object included in 3D contents (S810). FIG. 9 shows 3D contents according to an embodiment. 3D contents according to an embodiment, as shown in FIG. 9, may be contents created using a 3D scanner. The image processing device according to an embodiment may determine a target object 910 on the basis of user input for selecting the target object 910 in the 3D contents. Alternatively, the image processing device according to an embodiment may determine the target object 910 in the 3D contents using an object recognition algorithm for recognizing the target object 910 in the 3D contents.

Next, the image processing device according to an embodiment may obtain a plurality of 2D images for the selected object (S820). The image processing device according to an embodiment, as described above with reference to FIG. 3, may determine the creation positions of the plurality of 2D images in a virtual 3D space. This is, as described above, may be described by creating a plurality of virtual cameras in a virtual 3D space. In this respect, creating 2D images at the positions of a plurality of virtual cameras may be referred to for creating 2D images at creation positions of 2D images hereafter.

The image processing device according to an embodiment may create a plurality of virtual cameras in a virtual 3D space on the basis of predetermined camera arrangement. In another embodiment, the image processing device may create a plurality of cameras in a virtual space on the basis of user input.

The image processing device according to an embodiment may create a 2D image of a target object at a virtual camera position. The image processing device according to an embodiment may create an image in accordance with a predetermined option. The predetermined option may be a series of camera configuration properties for creating an image. For example, the predetermined option may include an FOV, resolution, etc. Accordingly, the image processing device according to an embodiment, as described above, may match and store additional information (e.g., camera position, FOV, resolution information, etc.) created with a 2D image to the 2D image.

Next, the image processing device according to an embodiment may detect the boundary line of an object from a plurality of 2D images, as described above (S830). Next, the image processing device according to an embodiment may select a boundary line representing the same boundary line of 3D contents from detected boundary lines (S840). The image processing device according to an embodiment may select a boundary line representing the same boundary line of 3D contents by classifying the boundary lines detected from the plurality of 2D images on the basis of whether the corresponding boundary lines of 3D contents are the same. An image processing device according to another embodiment may determine whether they represent the same boundary lines of the 3D contents on the basis of user input.

Next, the image processing device according to an embodiment may create the boundary line of 3D contents in a 3D space by creating a plurality of projection surfaces using the plurality of boundary lines selected as described above (S850).

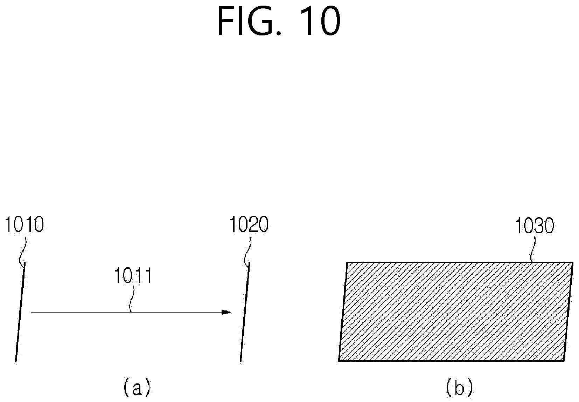

Next, the image processing device according to an embodiment may create a 3D object by creating a surface in the 3D space using the boundary lines determined in the 3D space. More detailed description is provided with reference to FIG. 10. When a first boundary line 1010 and a second boundary line 1020 are recognized in a 3D space, the image processing device according to an embodiment may create a boundary surface 1030 by extending (1011) any one of the boundary lines toward the other boundary line.

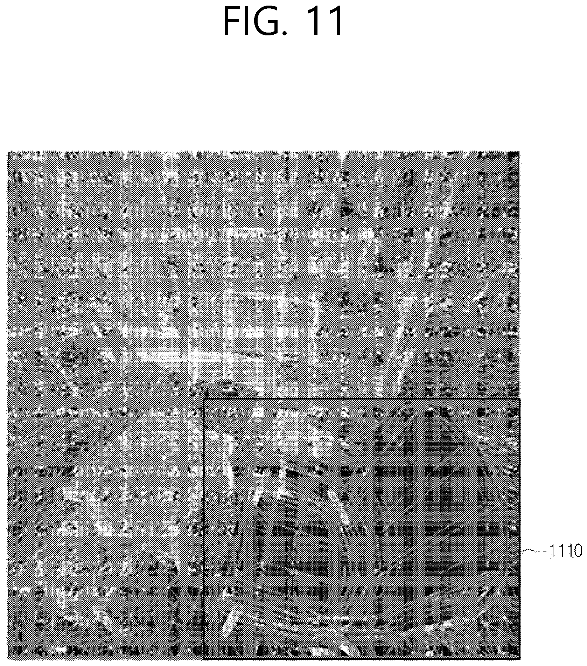

Next, the image processing device according to an embodiment may modify 3D contents using the created 3D object (S870). The image processing device according to an embodiment, as shown in FIG. 11, may modify 3D contents by adding the created 3D object 1110 to the existing 3D contents. The image processing device according to an embodiment may modify the 3D contents by removing a target object from the 3D contents and adding the created 3D object.

The image processing device and image processing method according to an embodiment described above may be implemented and recorded on a computer-readable medium in a program type that can be executed through various computer devices. The computer-readable media may include program commands, data files, and data structures individually or in combinations thereof. The program commands that are recorded on the media may be those specifically designed and configured in accordance with an embodiment or may be those available and known to those engaged in computer software in the art. The computer-readable recording media include magnetic media such as hard disks, floppy disks, and magnetic media such as a magnetic tape, optical media such as CD-ROMs and DVDs, magneto-optical media such as floptical disks, and hardware devices specifically configured to store and execute program commands, such as ROM, RAM, and flash memory. The program commands include not only machine language codes compiled by a compiler, but also highlevel language code that can be executed by a computer using an interpreter etc.

The above description of embodiments and the accompanying drawings are only an example for the convenience of description, and the items, contents, and images of the information displayed in each screen may be modified and displayed in various ways.

Although the present disclosure has been described with reference to the exemplary embodiments illustrated in the drawings, those are only examples and may be changed and modified into other equivalent exemplary embodiments from the present disclosure by those skilled in the art. Therefore, the technical protective range of the present disclosure should be determined by the scope described in claims.

### INDUSTRIAL AVAILABILITY

The present disclosure may be used to create 3D contents.

## Claims

1. An image processing method performed by an image processing device, the image processing method comprising:
obtaining a first image representing a 2D image of 3D contents observed from a first position in a 3D coordinate system and a second image representing a 2D image of the 3D contents observed from a second position in the 3D coordinate system;
detecting a first boundary line representing one boundary of the 3D contents from the first image;
detecting a second boundary line representing the one boundary from the second image; and
determining a third boundary line for three-dimensionally representing the one boundary in the 3D coordinate system using the first boundary line and second boundary line.

2. The image processing method of claim 1, wherein the determining of the third boundary line includes:
creating a first projection surface by projecting the first boundary line in a direction in which the 3D contents are observed at the first position;
creating a second projection surface by projecting the second boundary line in a direction in which the 3D contents are observed at the second position; and
determining the third boundary line on the basis of crossing of the first projection surface and the second projection surface.

3. The image processing method of claim 2, wherein the creating of the first projection surface is performed by projecting the first boundary line on the basis of FOV (Field Of View) information and resolution information of the first image.

4. The image processing method of claim 1, wherein the detecting of the first boundary line includes:
displaying the first image on a user terminal;
representing the first boundary line on the first image on the basis of user input; and
detecting the first boundary line in accordance with representation of the first boundary line.

5. The image processing method of claim 4, further comprising modifying the first boundary line by changing the position of at least one point constituting the first boundary line in accordance with position movement of an indicator displayed on the terminal,
wherein the position of the indicator displayed on the terminal is changed in accordance with user input.

6. The image processing method of claim 1, further comprising creating a boundary surface three-dimensionally represented in the 3D coordinate system using the third boundary line.

7. The image processing method of claim 6, wherein the boundary surface is created extending the third boundary line in a predetermined direction.

8. An image processing method performed by an image processing device, the image processing method comprising:
recognizing a target object in 3D contents;
obtaining a first image and a second image in which the target object is 2-dimensionally represented;
detecting a boundary line of the target object in the first image and the second image; and
determining a boundary line three-dimensionally represented in the 3D coordinate system using the detected boundary line.

9. The image processing method of claim 8, wherein the determining of the three-dimensionally represented boundary line includes determining a boundary line representing the same boundary of the target object represented in both the first image and the second image.

10. The image processing method of claim 8, further comprising creating a boundary surface three-dimensionally represented in the 3D coordinate system using the three-dimensionally represented boundary line.

11. The image processing method of claim 10, further comprising adding the created boundary surface to the 3D contents.

12. The image processing method of claim 11, wherein data about the created boundary surface are added to the 3D contents, after predetermined data corresponding to the created boundary line are removed from the 3D contents.

13. An image processing device comprising a processor and a memory,
wherein the processor
obtains a first image representing a 2D image of 3D contents observed from a first position in a 3D coordinate system,
obtains a second image representing a 2D image of the 3D contents observed from a second position in the 3D coordinate system,
detects a first boundary line representing one boundary of the 3D contents from the first image,
detects a second boundary line representing the one boundary from the second image; and
determines a third boundary line for three-dimensionally representing the one boundary in the 3D coordinate system using the first boundary line and second boundary line.

14. An image processing device comprising a processor and a memory,
wherein the processor
recognizes a target object in 3D contents,
obtains a first image and a second image in which the target object is 2-dimensionally represented,
detects a boundary line of the target object in the first image and the second image, and
determines a boundary line three-dimensionally represented in the 3D coordinate system using the detected boundary line.

15. A computer-readable recording medium in which computer programs for performing the method of claim 1 or 8 are recorded.
